Europäisches Patentamt

European Patent Office

Office européen des brevets

(11) Veröffentlichungsnummer: **0 151 103 B1**

# EUROPÄISCHE PATENTSCHRIFT

(45) Veröffentlichungstag der Patentschrift: **02.05.91**

(21) Anmeldenummer: **85890014.5**

(22) Anmeldetag: **21.01.85**

(51) Int. Cl.5: **B23P 15/14**, B22F 7/08, B23P 15/00

(54) Verfahren zur Herstellung von kraftübertragenden, insbesondere drehmomentübertragenden Elementen.

(30) Priorität: **24.01.84 AT 228/84**

(43) Veröffentlichungstag der Anmeldung:
**07.08.85 Patentblatt 85/32**

(45) Bekanntmachung des Hinweises auf die
Patenterteilung:
**02.05.91 Patentblatt 91/18**

(84) Benannte Vertragsstaaten:
**BE CH DE FR GB IT LI NL SE**

(56) Entgegenhaltungen:
EP-A- 0 022 605    EP-A- 0 052 092
EP-A- 0 074 347    EP-A- 0 114 591
EP-A- 0 114 592    EP-A- 0 114 593
DE-A- 1 802 430    GB-A- 1 265 137
US-A- 4 405 295

(73) Patentinhaber: **BÖHLER Gesellschaft m.b.H.
Elisabethstrasse 12
A-1010 Wien(AT)**

(72) Erfinder: **Gstettner, Manfred Ing.
A. Böhlergasse 10b
A-8605 Kapfenberg(AT)**
Erfinder: **Hribernik, Bruno, Dipl. -Ing.
Gloriettsiedlung 11
A-8600 Bruck/Mur(AT)**
Erfinder: **Kohnhauser, Alexander
Stubenberggasse 14
A-8605 Kapfenberg(AT)**

## Beschreibung

Die Erfindung bezieht sich auf ein Verfahren zur Herstellung von über einen/eine oder mehrere Zähne, Nocken, Ausnehmungen od. dgl. kraftübertragenden oder drehmomentübertragenden Elementen, Zahnrädern, Nocken od.dgl., die zumindest mit zwei verschiedenen Materialien aufgebaut sind.

Aus der DE-C-24 58 291 wird ein Schmiedeverfahren zur Herstellung eines Zahnrades auf einer Welle beschrieben. Einer der Teile wird hierbei pulvermetallurgisch hergestellt, wohingegen das andere Formstück auf schmelzmetallurgischem Weg gewonnen wurde. Diese Teile werden sodann in einem Schmiedegesenk formschlüssig verbunden.

In der GB-A-1 265 137 wird ein Verfahren zur Herstellung von Zahnrädern mit Achsen beschrieben, wobei ein Verbinden zwischen dem Zahnkranz und dem Schaft ebenfalls durch Gesenkschmieden erfolgt und ein metallischer Verbund zwischen Zahnkranz und Schaft erfolgen soll. Als Materialien kommen hiebei unterschiedliche Werkstoffe in Frage, beispielsweise wird die Kombination Stahl für den Zahnkranzring und Titan für den Körper empfohlen.

Derartige Zahnräder weisen jedoch den Nachteil auf, daß einerseits nur ein sehr geringer Verbund zwischen den kraftübertragenden Elementen erreicht wird und daß durch das Gesenkschmieden eine vollkommen unterschiedliche Warmverformung stattfindet, wobei beispielsweise der innere Teil nur einer geringen Warmverformung unterliegt, sodaß dessen Festigkeit nur außerordentlich gering ist.

Aus EP-A-0 074 347 ist ein Verfahren zur Herstellung von Förderschnecken mit einem zähen Stahlkern und einer hochverschleißfesten Plattierung bekannt, bei welchem durch Schmieden oder Warmwalzen unter Ausbildung einer metallischen Bindung zwischen Stahlkern und Hülle aus Plattierungswerkstoff ein Rohling hergestellt und nach Weichglühen das Schneckenprofil herausgeformt wird und in weiterer Folge ein Härten sowie Anlassen und die Fertigbearbeitung auf Endmaß erfolgen.

Durch die Wahl eines hochverschleißfesten Plattierungswerkstoffes für die Stege und durch die Wahl eines zähfesten Stahlkernes der Förderschnecken für Kunststoffmaschinen wird eine Standzeitverbesserung erreicht.
Die vorliegende Erfindung hat sich zur Aufgabe gesetzt, ein Verfahren zur Herstellung von kraftübertragenden oder drehmomentübertragenden Elementen zu schaffen, das erlaubt, die unterschiedlichen metallurgischen Materialien sicher zu verbinden, wobei gleichzeitig eine Verbesserung der Eigenschaften durch Warmverformung derselben erzielt wird, und das eine möglichst hohe Freiheit bei einem gleichzeitig vereinfachten Arbeitsverlauf in der Herstellung der Zahnräder od. dgl. , insbesondere bei der Wärmebehandlung und/oder Oberflächenbehandlung erlaubt.

Eine weitere Aufgabe des erfindungsgemäßen Verfahrens besteht darin, ein Verfahren zu schaffen, das es erlaubt, kraftübertragende Elemente zu erzeugen, die neben einer Achse , die zur Lagerung des Elementes dient, zwei weitere Strukturen, z.B. Zahnkränze, Ausnehmungen od. dgl. besitzen, wobei die Kraftübertragung von einem Zahnkranz zum anderen Zahnkranz erfolgen soll, und eine unterschiedliche Beanspruchung der Zahnkränze und dgl. erfolgt, wodurch eine unterschiedliche Ausbildung von den einzelnen Zähnen , Ausnehmungen und dgl. bedingt wird.

Die gestellte Aufgabe wird durch die Verfahrensschritte und -merkmale des Patentanspruchs 1 erfindungsgemäß gelöst.

Dadurch, daß die kraftübertragenden oder drehmomentübertragenden Elemente aus einem Stabmaterial geformt werden, das einer Mindestwarmverformung unterlegen ist, liegt ein Material vor, das eine besonders hohe Festigkeit hat, wobei gleichzeitig die Faserrichtung der Kraftübertragungsrichtung besonders vorteilhaft Rechnung trägt. Weiters kann auch dadurch ein besonders günstiger Aufbau mit unterschiedlichen Materialien erreicht werden, da die Materialien in radialer Schichtfolge aufeinander angeordnet sind.

Eine besonders vorteilhafte Ausführungsform des erfindungsgemäßen Verfahrens besteht darin, daß in ein Hüllenrohr aus einem Stahl ein Stab oder Rohr aus Titan oder einer Titanbasislegierung angeordnet wird, worauf warmverformt , formgebend verarbeitet und materialabtragend endgeformt wird. Auf diese Art und Weise kann ein Zahnrad od. dgl. erhalten werden, das einerseits den besonders hohen Beanspruchungen der Kraftübertragung, wie sie beispielsweise bei der Kraftübertragung mit feinen Zähnen gegeben sind, gewachsen ist, wobei gleichzeitig eine besonders geringgewichtige Ausführungsform erhalten werden kann.

Eine besonders vorteilhafte Kombination zwischen pulvermetallurgischem und schmelzmetallurgischem Verfahren , wobei gleichzeitig ein hervorragender den hohen mechanischen Beanspruchungen Rechnung tragender Verbund erhalten werden kann, besteht darin, daß in ein Hüllenrohr aus Titan oder einer Titanbasislegierung, das gegebenenfalls in einer Kapsel angeordnet wird, ein pulverförmiger Werkstoff, insbesondere unter Aussparung eines zentralen Raumes eingebracht wird, gegebenenfalls verdichtet und an den Hüllenrohrenden bzw. Kapselrohrenden verschlossen wird, worauf oder bevor evakuiert wird, und das so verschlossene Rohr in einer Gasatmosphäre bei zumindest 700° C, jedoch unterhalb der Schmelzpunkte der metallischen Werkstoffe und bei einem Druck von zumindest 900 bar verpreßt wird, worauf warmverformt formgebend verarbeitet und materialabtragend endgeformt wird.

Soll ein kraftübertragendes Element erzeugt werden, bei dem zumindest teilweise die Kräfte über eine Ausnehmung, z.B. Innenverzahnung übertragen werden sollen, wobei eine besonders große Vielzahl von Werkstoffpaarungen gegeben sein soll, so kann in einem Hüllenrohr und/oder Kapsel ein Stab oder Rohr aus Titan oder einer Titanbasislegierung angeordnet werden, und in den Zwischenraum ein pulverförmiger Werkstoff eingebracht werden, wobei die Hüllenrohr- bzw. die Kapselrohrenden verschlossen werden, worauf oder bevor evakuiert wird, und das so verschlossene Rohr in einer Gasatmosphäre bei zumindest 700° C , jedoch unterhalb der Schmelzpunkte der metallischen Werkstoffe und bei einem Druck von zumindest 900 bar verpreßt wird, warmverformt formgebend verarbeitet und materialabtragend endgeformt wird.

Wird als pulverförmiger Werkstoff Titan oder eine Titanbasislegierung verwendet, so kann insbesondere bei Eisenlegierungen eine Bildung einer harten Zwischenschicht, die für die mechanischen Festigkeiten nachteilig sein kann, vermieden werden, wobei gleichzeitig unerwünschte Diffusionen zwischen den Werkstoffen verhindert werden können.

Die abgelängten Stücke des stabförmigen Materials können auch gesenkgeschmiedet werden, wobei diese Fertigungsweise sich besonders für die Massenproduktion eignet.

Zur metallischen Verbindung zwischen den metallischen Werkstoffen kann ein Haftvermittler, insbesondere aus Nickel,verwendet werden, wobei diese Schicht gleichzeitig eine Diffusion der metallischen Werkstoffe ineinander verhindern kann.

Eine besonders vorteilhafte Variante des erfindungsgemäßen Verfahrens besteht darin, daß ein Rohr und/oder Kernstab aus vorgepreßtem Pulver verwendet wird, wobei dann ein pulvermetallurgischer Verbund zwischen den Stoffen unterschiedlicher chemischer Zusammensetzung zur Warmverformung verwendet werden kann.

Im folgenden wird die Erfindung anhand der Beispiele näher erläutert.

Beispiel 1:

Auf herkömmliche Art wurde ein Zahnrad mit einer Außenverzahnung und exzentrischer Innenausnehmung hergestellt, wobei die Flächen der Innenausnehmung eine Einsatztiefe mit einer Aufkohlung von mindestens 1,2 mm aufweisen soll, während an der Außenfläche für die Außenverzahnung aufgrund der feinen Verzahnung lediglich eine Einsatztiefe von 0,3 mm zulässig ist und der Kohlenstoffpegel von 0,7 Gew.-% bei der Einsatzhärtung eingestellt werden soll. Es wird hiebei ein Einsatzstahl folgender Zusammensetzung in Gew.-% C:0,17, Si:0,3, Mn:1,2, Cr:0,9, Rest Eisen und herstellungsbedingte Verunreinigungen verwendet. Es wird vorerst ein Stabstahl durch Drehen hergestellt, wobei mit Übermaß gefertigt wird. Sodann wird der Stabstahl abgelängt und in der so erhaltenen Scheibe wird eine exzentrische Innenausnehmung mechanisch herausgearbeitet, wobei ebenfalls die Schleifzugabe zu berücksichtigen ist. Danach erfolgt die Aufkohlung auf ca. 1,5 mm Einsatztiefe mit anschließendem Weichglühen, wonach an der Außenoberfläche die Einsatzschichte zur Gänze abgedreht wird. Darauf werden die Zähne an der Außenseite gefertigt und es erfolgt eine zweite Aufkohlungsbehandlung bei 850° C und eine Einsatztiefe von 0,3 mm mit anschließendem Härten und Anlassen auf 740 +/-20 HV.

Bei der erfindungsgemäßen Herstellung des gleichen Zahnrades kann aus einem Rundverbund mit metallischer Bindung aus einem Stahl folgender Zusammensetzung in Gew.-% C:0,17, Si: 0,3, Mn: 1,2, Cr: 0,9, Rest Eisen und herstellungsbedingte Verunreinigungen und C: 0,62, Si: 1,1, Mn: 1,1, Cr: 0,6 hergestellt werden, wobei ein Hohlzylinder mit einem Außendurchmesser von 100 mm und einer Wandstärke von 24 mm aus dem zuerst angeführten Stahl mit einem entsprechenden zylindrischen Stab mit einem Durchmesser von 42 mm versehen wird. Nach der stirnseitigen dichten Verschweißung an beiden Enden wird der Zylinder auf einen Außendurchmesser von 55 mm geschmiedet, wodurch sich eine 3,3-fache Verformung ergibt. Aus dem so erhaltenen Stabmaterial werden Scheiben abgelängt, aus welchen die Zahnräder sowohl mit der Innenausnehmung als auch mit der erforderlichen Außenverzahnung fertiggestellt werden, worauf die Rohlinge einer Endwärmebehandlung, also dem Aufkohlen auf 0,3 mm Tiefe bei 860° C mit einem Kohlenstoffpegel von 0,7 Gew.-% mit anschließender Härtung unterzogen wurden. Der Kernwerkstoff wies nach erfolgter Anlaßbehandlung eine Härte von 740 +/- 20 HV auf und die Verschleißschichte in der exzentrischen Innenform betrug zumindest 3 mm. Wie aus diesem Vergleichsbeispiel hervorgeht, kann nach dem erfindungsgemäßen Verfahren die Bearbeitung der Zahnräder in einem Arbeitsgang erfolgen, wobei keine mehrfache Einsatzhärtung erforderlich ist, die mechanische Bearbeitung in einem Arbeitsschritt erfolgen kann und durch geeignete Werkstoffwahl kann die Aufkohlungszeit geringer gehalten werden.

Beispiel 2:

Es sollte ein Zahnrad hergestellt werden, das einen Außenring aus Nitrierstahl und einen Körper aus Titan aufweist.

In einem rohrförmigen Zylinder mit einem Außendurchmesser von 180 mm und einem Innendurchmesser von 130 mm und einer Länge von 900 mm aus einem Nitrierstahl folgender chemischer Zusammensetzung in Gew.-% C:0,34, Cr: 1,2, Mo: 0,2, Al:0,95 wurde ein Stab aus Reintitan mit engem Spiel eingebracht. Dieser Körper wurde sodann mit einem Blechmantel, der eine Dicke von 2 mm aufwies, gasdicht umschlossen, worauf bei 950° C und 1000 bar drei Stunden lang heißisostatisch verpreßt wurde. Sodann wurde die Temperatur im Ofen auf 780 ° C gesenkt und eine Stunde gehalten, worauf im Ofen bis auf 550° C abgekühlt wurde, wonach die weitere Abkühlung in Luft bei Außentemperatur erfolgte. Der so erhaltene Verbund wurde durch Schmieden einer 2-fachen Verformung unterworfen. Das so erhaltene Stabmaterial wurde in 35 mm dicke Scheiben aufgeteilt, die wie folgt vergütet wurden: Abschrecken aus 900° C in Öl und Anlassen bei 570° C für eine Zeitdauer von acht Stunden. Aus den so erhaltenen Scheiben wurden Zahnräder mit einer Außenverzahnung und einer entsprechenden Innenausnehmung hergestellt. Die so mechanisch gefertigten Zahnräder wurden einer Gasnitrierung bei 510° C 40 Stunden lang unterworfen, wobei das Titan durch eine entsprechende Paste abgedeckt wurde. Das so erhaltene Zahnrad wies eine Nitriertiefe von 0,35 mm auf.

Beispiel 3:

In eine metallische Kapsel mit einem Außendurchmesser von 90 mm, einer Wandstärke von 2 mm und einer Gesamthöhe von 900 mm wurde ein Zylinder mit einem Durchmesser von 60 mm und einer Länge von 900 mm aus einer Titanbasislegierung mit folgender Zusammensetzung in Gew.-%: C:max. 0,08, Al: 6,0, V: 4,0, Rest Titan und herstellungsbedingte Verunreinigungen zentrisch eingesetzt. Der Zwischenraum wurde mit einem Metallpulver folgender chemischer Zusammensetzung in Gew.-% C: 2,23, Cr: 13,0, Mo: 1,0, V: 3,8, Rest Eisen und herstellungsbedingte Verunreinigungen gefüllt. Das eingebrachte Pulver wurde verdichtet, worauf evakuiert und die Kapsel gasdicht verschlossen wurde.

Es wurde sodann drei Stunden bei 1000 bar und 1050° C heißisostatisch verpreßt. Der so erhaltene Körper wurde auf einer Langschmiedemaschine warmverformt, wobei der Außendurchmesser von 90 mm auf 70 mm reduziert wurde, was einem Verformungsgrad von ca. 1,65 entspricht. Der so erhaltene Verbundkörper wurde auf 700° C zwei Stunden lang erhitzt, wonach in Luft abgekühlt wurde. Sodann erfolgte die mechanische Bearbeitung, worauf das so mechanisch gefertigte Zahnrad folgender Wärmebehandlung unterworfen wurde: 1 Stunde lang auf 950° erhitzt, in Öl abgekühlt und sodann 2 Stunden auf 500° C erwärmt wurde. Das so erhaltene Zahnrad wies eine verschleißfeste Außenzone auf, an die ein zäher und leichter Innenbereich anschließt, wobei eine zusätzliche Nitrierung z.B. zur Erhöhung der Gleiteigenschaften beim Außenwerkstoff durchgeführt werden kann.

Beispiel 4:

Ein Stabmaterial, das gemäß Beispiel 2 erhalten wurde und aus einem Nitrierstahl besteht, in welchem ein Titanstab eingeschlossen ist, wurde von seiner äußeren Stahlkapsel durch Zerspanen befreit, worauf Scheiben abgelängt wurden. Diese Scheiben wurden sodann auf 920° C erhitzt und in einem Schmiedegesenk gesenkgeschmiedet, wobei ein Stirnrad für ein LKW-Getriebe erhalten wurde, das einen Zahnkranz aus Nitrierstahl aufwies. Der so erhaltene Schmiederohling wurde analog Beispiel 2 einer Vergütung unterzogen, wonach eine spanabhebende mechanische Endformgebung durchgeführt wurde. Das mechanisch vollständig bearbeitete Zahnrad wurde bei 510° C 30 Stunden lang gasnitriert, wobei sich eine Stickstoffdiffusion bis auf 0,3 mm einstellte. Das Titan wurde durch eine Schutzpaste abgedeckt. Nach der durchgeführten Gasnitrierung war das Zahnrad einsatzbereit.

Es besteht sodann auch die Möglichkeit, daß ein Stabmaterial aufgebaut wird, welches aus mehr als zwei Materialien besteht. Weiters kann sowohl der Außenzylinder als auch der Innenstab oder der Innenzylinder auf pulvermetallurgischem Wege hergestellt werden, sei es als grüne Preßlinge oder bereits vollständig verdichteter Körper.

**Ansprüche**

1. Verfahren zur Herstellung von über einen/eine oder mehrere Zähne, Nocken, Ausnehmungen od. dgl. kraftübertragenden oder drehmomentübertragenden Elementen, Zahnrädern, Nokken od. dgl., die zumindest mit zwei verschiedenen metallischen Materialien aufgebaut sind, welche einen metallischen Verbund aufweisen, wobei mit zumindest zwei unterschiedlichen metallischen Werkstoffen ein Stabmaterial aufgebaut wird, indem eine rohrförmige Hülle aus einem Werkstoff und mindestens eine an diese radial anschließende Schicht aus einem weiteren metallischen Werkstoff einer Warmverformung mit einer zumindest 1,3-fachen Verformung unterworfen wird, worauf das warmverformte Stabmaterial einer Wärmebehandlung unterworfen, formgebend durch Ablängen oder Zerteilen verarbeitet wird, wonach die Zähne oder Ausnehmungen der kraftübertragenden oder drehmomentübertragenden Elemente in einem weiteren Arbeitsvorgang vor/nach einer Wärme-und/oder Oberflächenbehandlung materialabtragend endgeformt werden.

2. Verfahren nach Anspruch 1, dadurch gekennzeichnet,daß in ein Hüllenrohr aus einem Stahl ein Stab oder Rohr aus Titan oder einer Titanbasislegierung angeordnet wird, worauf warmverformt formgebend verarbeitet und materialabtragend endgeformt wird.

3. Verfahren nach Anspruch 1, dadurch gekennzeichnet, daß in ein Hüllenrohr aus Titan oder einer Titanbasislegierung, das gegebenenfalls in einer Kapsel angeordnet wird, ein pulverförmiger Werkstoff, insbesondere unter Aussparung eines zentralen Raumes, eingebracht, gegebenenfalls verdichtet wird, und an den Hüllenrohrenden bzw. Kapselrohrenden verschlossen wird, worauf oder bevor evakuiert wird, und das so verschlossene Rohr in einer Gasatmosphäre bei zumindest 700 °C, jedoch unterhalb der Schmelzpunkte der metallischen Werkstoffe , und bei einem Druck von zumindest 900 bar verpreßt wird,worauf warmverformt formgebend verarbeitet und materialabtragend endgeformt wird.

4. Verfahren nach Anspruch 1 oder 3, dadurch gekennzeichnet, daß in einem Hüllenrohr und/oder Kapselrohr ein Stab oder Rohr aus Titan oder einer Titanbasislegierung angeordnet wird und in den Zwischenraum ein pulverförmiger Werkstoff eingebracht wird und an den Hüllenrohrenden bzw. an den Kapselrohrenden verschlossen wird, worauf oder bevor evakuiert wird und das so verschlossene Rohr in einer Gasatmosphäre bei zumindest 700 °C , jedoch unterhalb der Schmelzpunkte der metallischen Werkstoffe und bei einem Druck von zumindest 900 bar verpreßt wird, worauf warmverformt formgebend verarbeitet und materialabtragend endgeformt wird.

5. Verfahren nach Anspruch 3 oder 4, dadurch gekennzeichnet, daß ein pulverförmiger Werkstoff aus Titan oder einer Titanbasislegierung verwendet wird.

6. Verfahren nach einem der Ansprüche 1 bis 5, dadurch gekennzeichnet, daß die abgelängten Stücke gesenkgeschmiedet werden.

7. Verfahren nach einem der Ansprüche 1 bis 6, dadurch gekennzeichnet, daß zur metallischen Verbindung ein Haftvermittler, insbesondere aus Nickel, verwendet wird.

8. Verfahren nach einem der Ansprüche 1 bis 7, dadurch gekennzeichnet, daß zumindest ein Rohr und/oder Kernstab aus vorgepreßtem Pulver verwendet wird.

**Claims**

1. A method of producing members, gearwheels, cams or the like, [for] transmitting power or torque by way of one or more teeth, cams, recesses or the like and made up at least of two different metallic materials which have a metallic bond, a bar material being made up of at least two different metallic materials, while a tubular covering of one material and at least one layer radially adjacent thereto are subjected to a thermal deformation with an at least 1·3-fold deformation, after which the thermally deformed bar material is subjected to a heat treatment, and is shaped by cutting into lengths or division, after which the teeth or recesses of the power-or torque-transmitting members are finally shaped by the removal of material in a further operating process before/after a heat and/or surface treatment.

2. A method according to Claim 1, characterized in that a bar or tube of titanium or a titanium-based alloy is placed in a covering tube of steel, after which treatment is performed by shaping with heat deformation and final shaping is performed by the removal of material.

3. A method according to Claim 1, characterized in that a powdered material is introduced and where appropriate compressed, in particular by hollowing out a central space, into a covering tube of titanium or a titanium-based alloy, which where appropriate is placed in a capsule, and the ends of the covering tube or the capsule tube are closed off, evacuation takes place subsequently or beforehand, and the tube closed off in this way is compressed in a gas atmosphere at a temperature of at least 700°, but below the melting points of the metallic materials, and at a pressure of at least 900 bar, after which shaping is performed with heat deformation and final shaping is performed by the removal of material.

4. A method according to Claim 1 or 3, characterized in that a bar or tube of titanium or a titanium-based alloy is placed in a covering tube and/or capsule tube and a powdered material is introduced into the interspace, and the ends of the covering tube or the capsule tube are closed off, evacuation takes place subsequently or beforehand, and the tube closed off in this way is compressed in a gas atmosphere at a temperature of at least 700° C, but below the melting points of the metallic materials, and at a pressure of at least 900 bar, after which shaping is performed with heat deformation and final shaping is performed by the removal of material.

5. A method according to Claim 3 or 4, characterized in that a powdered material of titanium or a titanium-based alloy is used.

6. A method according to any one of Claims 1 to 5, characterized in that the pieces cut into lengths are drop-forged.

7. A method according to any one of Claims 1 to 6, characterized in that a coupling agent, in particular of nickel, is used for the metallic bond.

8. A method according to any one of Claims 1 to 7, characterized in that at least one tube and/or core bar of pre-pressed powder is used.

**Revendications**

1. Procédé de fabrication d'éléments, engrenages, cames ou analogues, de transmission de forces ou de moments de rotation par l'intermédiaire d'un/ d'une ou de plusieurs dent(s), came(s), creux ou analogues(s), éléments qui sont constitués d'au moins deux matériaux métalliques différents, lesquels présentent une liaison métallique, un matériau en barre étant constitué d'au minimum deux matières premières métalliques différentes, tandis qu'une gaine tubulaire d'une matière première et, s'y raccordant radialement, au moins une couche d'une autre matière première métallique sont soumises à un façonnage à chaud comportant au minimum 1 à 3 formages, à la suite de quoi, le matériau en barre façonné à chaud est soumis à un traitement thermique, façonné par mises à longueur ou actions de séparation, après quoi, les dents ou creux des éléments de transmission de forces ou de moments de rotation sont finis par enlèvement de matière au cours d'une autre opération avant/après un traitement thermique et/ou de surface.

2. Procédé selon la revendication 1, caractérisé en ce qu'une barre ou un tube en titane ou en alliage à base de titane est placé(e) dans un tube de gaine en acier, puis est façonné à chaud et est fini(e) par enlèvement de matière.

3. Procédé selon la revendication 1, caractérisé en ce que, dans un tube de gaine en titane ou en alliage à base de titane, placé éventuellement dans une enveloppe, une matière première en poudre est introduite avec réservation d'un espace central notamment, comprimée éventuellement, et enclose aux extrémités de la gaine ou de l'enveloppe après ou avant que le vide n'y soit fait, le tube ainsi fermé est comprimé dans une atmosphère gazeuse à au moins 700° C, en dessous cependant des points de fusion des matières premières métalliques et sous une pression d'au moins 900 bars, à la suite de quoi, il est façonné à chaud et fini par enlèvement de matière.

4. Procédé selon la revendication 1 ou 3, caractérisé en ce que dans un tube de gaine et/ou d'enveloppe est placé une barre ou un tube en titane ou en alliage à base de titane et que dans l'espace intermédiaire est introduite une matière première en poudre, enclose aux extrémités du tube de gaine ou d'enveloppe après ou avant que le vide n'y soit fait, le tube ainsi fermé est comprimé dans une atmosphère gazeuse à au moins 700° C, en dessous néanmoins des points de fusion des matières premières métalliques et sous une pression d'au moins 900 bars, à la suite de quoi, il est façonné à chaud et fini par enlèvement de matière.

5. Procédé selon la revendication 3 ou 4, caractérisé en ce que l'on utilise une matière première en poudre en titane ou alliage à base de titane.

6. Procédé selon l'une des revendications I à 5, caractérisé en ce que les pièces mises à longueur sont estampées.

7. Procédé selon l'une des revendications 1 à 6, caractérisé en ce que l'on utilise un agent de liaison, en nickel en particulier, pour la jonction métallique.

8. Procédé selon l'une des revendications 1 à 7, caractérisé en ce que l'on utilise au moins un tube et/ou une barre centrale en poudre pré-comprimée.